# EUROPEAN PATENT APPLICATION

(11) **EP 3 892 690 A1**
(43) Date of publication of application: **13.10.2021**
(21) Application number: 20386017.6
(22) Date of filing: 09.04.2020
(51) Int. Cl.: C09D 4/00, C09D 5/16, C09D 5/14, C09D 7/62, C09D 7/40, C09D 175/16

(54) **ANTIBACTERIAL COATING WITH SILVER NANOPARTICLES IN A POLYMETRIC MATRIX FOR ELEVATOR COMPONENTS AND COMPONENTS WITH HIGH HYGIENE REQUIREMENTS**

(71) Applicant: Kleemann Hellas SA, 61100 Kilkis (GR)
(72) Inventor: Afrodite, Vlachou, 57001, Thermi - Thessaloniki (GR)
(74) Representative: Chatzara, Viktoria

(57) **Abstract**

This is an invention that refers to an antibacterial coating of silver nanoparticles in a polymeric matrix for use in elevators components and components with high hygiene demand. The antimicrobial coating consists of silver nanoparticles (1), oligomer (2), active diluent (3) and photoinitiator (4). In addition to the basic ingredients, additives (5) can be added in small percentages to optimize the appearance, rheological properties and solidification of the coating. The coating can be applied effectively to metallic, polymeric and ceramic surfaces in an easy and efficient manner, offering high antimicrobial protection.

## Description

Present invention is referred to an antibacterial coating with Silver nanoparticles in a polymeric matrix for elevator components and components with high hygiene requirements. This coating can be applied to metallic, polymeric and ceramic surfaces, easily and efficiently, offering a high antibacterial protection.

The growth and spread of resistant strains of microorganisms over every day use products, that may cause several infections that threat the human health, causes considerable concern. For this reason, it is imperative to compose materials with antibacterial action, in order to reduce the spread of microbial infections. The use of specific metals, such as silver, prevents the growth and spread of various micro-organisms. The mechanism with the widest range of applications, is the creation of a surface coating that protects the substrate and simultaneously renders the antibacterial property.

As an example of a high interest application, we could take a look at elevator cabins. The daily use of elevators, and the range of people who use them, makes it essential to protect the users due to the high microbial load being developed, especially on high microbial load surfaces (e.g call buttons, doors etc.). It is estimated that almost 5.9 million elevators are in use, according to statistics of ELA (European Lifts Association), while the elevators, and also the escalators, are used 1 billion times per day. Special attention should be paid to the touch surfaces of the cabin, as the buttons and the handrails, since the user interacts with these surfaces and their antibacterial protection is necessary. There is a category of elevators with high demands in the area of hygiene and protection, for example in hospitals, schools and universities. On the other hand, the necessity of an antibacterial cabin is not limited to these, since the people nowadays care more about hygiene issues, so the demand for products that offer antibacterial protection arises even in the market of elevators.

Historically, silver has been used for the manufacturing of household utensils, food storage and as a water cleanser. The most prevalent approach for the action mechanism against bacteria is the fact that the silver cation has the tendency to react with functional groups that contain sulphur, nitrogen and oxygen, which are spread into the structure of the biological macromolecules and are necessary for the function of the bacteria. The interaction of the cation with functional group results in the destruction of the proteins' tertiary structure, this way they become non-functional. These proteins may be functional (enzymes), or structural by being part of the bacteria cellular membrane. In the last case, proteins' destruction leads to the bacterial cell destruction. Silver offers a large range of antimicrobial protection to bacteria, viruses and also fungus. Silver nanoparticles present better antimicrobial action compared to larger silver particles, due to their larger specific surface area which provides better interaction with the micro-organisms. Nowadays, silver coatings are produced basically through the electrochemical deposition and natural vapor deposition, these methods offer a uniform coating thickness over the coated area.

The present invention suggests an antibacterial coating of silver nanoparticles in a polymeric matrix for elevator components, such as buttons, handrails and side claddings, and generally for surfaces with high hygiene demands. The advantage of the method is that the silver is in the form of nanoparticles, which offers an active surface orders of magnitude greater than the active surface in the case of a uniform silver coating over the coated area. The above-mentioned property results to a greater antimicrobial action in the case of silver nanoparticles compared to a uniform silver coating and lower cost at the same time. Moreover, the silver nanoparticle coating can be applied over any kind of material (polymers, metals and ceramics), while polymeric and metallic surfaces are the most widely used surfaces in an elevator cabin. Finally, the offered antimicrobial protection can be achieved even by avoiding classic chemical biocidals and toxic substances, this composition makes the coating much eco-friendlier.

The antimicrobial coating consists of silver nanoparticles (1), oligomer (2), active diluent (3) and photoinitiator (4). Besides the basic ingredients, additional additives (5) may be added smaller percentages for the optimization of the visual effect, the rheological properties and the solidification of the coating. The range of content (% w/w) for each ingredient, they are presented in the following table:

| **Ingredient** | **Range of content (% w/w)** |
|---|---|
| Silver nanoparticles (1) | 0,01 - 0,1 |
| Oligomer (2) | 38,6 - 56,2 |
| Active diluent (3) | 21,9 - 54,6 |
| Photoinitiator (4) | 3,8 - 7,4 |
| Additives (5) | > 1 |

Specifically, the term oligomer (2) refers to an aliphatic prepolymer mainly with acrylic and urethane action groups which may be bifunctional and / or tri-functional with a theoretical molecular weight of the order of 1500 - 3000, density of the order of 1.1-1.8 g/cm³ and theoretical viscosity between 3000 - 3500 mPa.s (Hoppler at 60°C). The term active diluent (3) represents an organic bifunctional and / or tri-reactive solvent with acrylic action with a theoretical molecular weight of the order of 290-320 and density between 1.01-1.2 g/cm³. A photoinitiator (4) is by definition the organic compound which under the influence of ultraviolet radiation (in the wavelength range of 363-395nm and the theoretical molecular weight of the order of 360-400), gets deconstructed into free radicals that initiate the polymerization reaction between the functional groups of the oligomer (2) and the active diluent (3).

The synthesis involves the precipitation of silver nanoparticles (1) from a colloidal suspension. The incorporation of the nanoparticles in the active diluent (3) is achieved under the influence of an ultrasonic bath to fully disperse them in the solution. Instead of the precipitation process solid silver nanoparticles (1) can be used. Then, an amount of photoinitiator (4) is added to the solution and the whole homogenized solution is mixed with an amount of oligomer (2) under constant stirring in order to fully incorporate all ingredients into a colourless viscous fluid. This homogenized solution is sprayed on the surface to be coated and exposed under an ultraviolet lamp at a distance of 5-10 cm for 5-15 sec, where it absorbs a radiation dose of 8-12 W/cm². After the radiation process is completed a further drying step may be required by one of the following techniques: (A) effect of a volatile coating of acrylic nature, (B) additional exposure to ultraviolet radiation with a wavelength range of 400-450 nm, and (C) drying at a temperature of 60-70 °C for a period of 1 - 3 hours.

The size of silver nanoparticles (1) affects their performance and the intensity of their properties. The smaller they are, the more drastic they become. The sizes used are from one nanometer (1 nm) to one hundred nanometers (100 nm).

Silver nanoparticles (1) may be surface modified / coated because they are more stable over time and can be more efficiently incorporated with the other ingredients, providing good dispersion (prevent aggregation) and increasing the properties offered by their presence. The surfaces that the antibacterial coating can be applied can be metallic, polymeric and ceramic, covering most materials found in an elevator cabin and in components with high hygiene demands. These materials can either be a metallic substrate such as stainlesssteel sheet, or a polymeric substrate such as laminated sheet metal and polymeric buttons.

### EXAMPLE

Silver nanoparticles (1) (0.007g) are mixed with 3.8 ml reactive diluent (3), and the mixture is placed in an ultrasound bath for 45 minutes and at room temperature. After this time, 0.643g of the photoinitiator (4) is added in the solution and the solution remains in the ultrasonic bath for 5 minutes more and in a dark place and strictly at a temperature below 22 °C. The solution is removed from the ultrasonic bath and transferred to a vessel where a quantity of oligomer (2) (5.257g) has been weighed, and with a constant and vigorous stirring, a homogenized mixture is prepared and is ready to be sprayed on the target surface. A small portion of this homogeneous mixture is transferred to the airbrush used for spraying, and after the target surface has been cleaned with ethanol from any powders and / or other impurities, a thin and uniform layer is sprayed into each specimen. Spraying takes place in a room where there is a constant temperature (25 °C) and adequate ventilation. After the spraying prior to the exposure to ultraviolet radiation, the specimens must remain in a dark place with adequate ventilation in the absence of dust. The spraying is followed by the ultraviolet radiation (wavelength: 365nm, power: 8W/cm²) in which the specimens are placed under an ultraviolet lamp and at a distance of 10cm for 7 seconds each so that the photoinitiator is activated and effecting the curing of the coating on the target surface. After passing through the ultraviolet lamp, the specimens are sprayed with an additive (5) (acrylic volatile agent) to accelerate the drying process of the coating. Selected specimens can be used in assessing antibacterial behaviour according to an internationally recognized standard ISO 22196: 2007 entitled "Plastics-Measurement of Antibacterial Activity and Efficacy on Plastics Surfaces (MOD)", which showed that the surface yields satisfactory antibacterial activity, R had a value of 0.84.

## Claims

1. The "antibacterial coating of silver nanoparticles in a polymeric matrix for use in elevators components and components with high hygiene demand." is **characterized in that** it consists of silver nanoparticles (1), oligomer (2), active diluent (3), photoinitiator (4) (5) at contents (% w / w): 0.01 - 0.1 for silver nanoparticles (1), 38.6 - 56.2 for oligomer (2), 21.9 - active diluent (3), 3.8-7.4 for the photoinitiator (4) and> 1 for the additives (5).

2. The "antibacterial coating of silver nanoparticles in a polymeric matrix for use in elevators components and components with high hygiene demand." according to Claim 1, **characterized in that** the silver nanoparticles (1) are in the size of one nanometer (1 nm) to one hundred nanometers (100 nm).

3. The "antibacterial coating of silver nanoparticles in a polymeric matrix for use in elevators components and components with high hygiene demand." according to Claim 1, **characterized in that** the silver (1) nanoparticles are in solid form.

4. The "antibacterial coating of silver nanoparticles in a polymeric matrix for use in elevators components and components with high hygiene demand." according to Claim 1, **characterized in that** the silver (1) nanoparticles are obtained after precipitation from a colloidal solution and incorporating an specific amount into the active diluent (3) under the influence of an ultrasonic bath to fully disperse them in the solution.

5. The "antibacterial coating of silver nanoparticles in a polymeric matrix for use in elevators components and components with high hygiene demand." **characterized in that** the oligomer (2) is an aliphatic prepolymer mainly of acrylic and urethane activity which may be bifunctional and / or tri-functional with a theoretical molecular weight of the order of 1500-3000 with a density of 1.1-1,8 g / cm3 and a theoretical viscosity in the range between 3000-3500 mPa.s (Hoppler at 60 ° C).

6. The "antibacterial coating of silver nanoparticles in a polymeric matrix for use in elevators components and components with high hygiene demand." **characterized in that** the active diluent (3) is an organic bifunctional and / or tri-functional solvent with acrylic activity with a theoretical molecular weight of the order 290-320 and a density of between 1.01-1.2 g / cm3.

7. The "antibacterial coating of silver nanoparticles in a polymeric matrix for use in elevators components and components with high hygiene demand." **characterized in that** the photoinitiator (4) is an organic compound that under the radiation using of ultraviolet light in a wavelength range of 363-395 nm and a theoretical molecular weight of the order 360-400. This compound gets deconstructed into free radicals that initiate the polymerization reaction between the active groups of the oligomer (2) and the active diluent (3).

8. The "antibacterial coating of silver nanoparticles in a polymeric matrix for use in elevators components and components with high hygiene demand." according to Claim 1, **characterized in that** it can be applied on metallic, polymeric and ceramic surfaces.

9. The "antibacterial coating of silver nanoparticles in a polymeric matrix for use in elevators components and components with high hygiene demand." according to Claim 1, **characterized in that** silver (1) nanoparticles are surface modified / coated.
